# EUROPEAN PATENT SPECIFICATION

(11) **EP 4 517 586 B1**
(45) Date of publication and mention of the grant of the patent: **07.10.2026**
(21) Application number: 24193868.7
(22) Date of filing: 09.08.2024
(51) Int. Cl.: G06N 3/045, G06N 3/08

(54) **AUTO-REGRESSIVE SYSTEM AND AUTO-REGRESSIVE METHOD FOR A LARGE LANGUAGE MODEL**
AUTOREGRESSIVES SYSTEM UND AUTOREGRESSIVES VERFAHREN FÜR EIN GROSSES SPRACHMODELL
SYSTÈME AUTO-RÉGRESSIF ET PROCÉDÉ AUTO-RÉGRESSIF POUR UN MODÈLE DE LANGAGE DE GRANDE TAILLE

(30) Priority: 11.08.2023 US 202363518953 P; 11.07.2024 US 202418769443
(43) Date of publication of application: 05.03.2025
(73) Proprietor: MediaTek Singapore Pte Ltd, Singapore 138628 (SG)
(72) Inventor: LIM, Jia Yao Christopher, 138628 Singapore (SG); TEH, Kelvin Kae Wen, 138628 Singapore (SG); LIN, Po-Yen, 30078 Hsinchu City (TW); FOO, Jung Hau, 138628 Singapore (SG); HSU, Chia-Wei, 30078 Hsinchu City (TW); LU, Yu-Lung, 30078 Hsinchu City (TW); CHEN, Hung-Jen, 30078 Hsinchu City (TW); LU, Chung-Li, 30078 Hsinchu City (TW); WONG, Wai Mun, 138628 Singapore (SG)
(74) Representative: Hoefer & Partner Patentanwälte mbB

(56) References cited:
- US-A1- 2023 177 399
- HUMZA NAVEED ET AL: "A Comprehensive Overview of Large Language Models", ARXIV.ORG, CORNELL UNIVERSITY LIBRARY, 201 OLIN LIBRARY CORNELL UNIVERSITY ITHACA, NY 14853, 12 July 2023 (2023-07-12), XP091561650

## Description

### Cross Reference to Related Applications

This application claims the benefit of U.S. Provisional Application No. 63/518,953, filed on August 11th, 2023.

### Background

Amidst the swift progression of technology, Large Language Models (LLMs) have demonstrated immense potential across a spectrum of applications. An LLM, a form of Artificial Intelligence (AI), is capable of processing and generating human language. By training LLMs on extensive volumes of text data, they acquire the ability to discern patterns and rules of language, thereby enabling them to undertake a multitude of tasks. For instance, LLMs can generate text, translate languages, answer queries, and compose various forms of creative text. In particular, transformer decoders within the LLM necessitate information from past tokens to predict the subsequent token. A prevalent technique to expedite the inference of transformer decoders during an inference interval is the introduction of a cache. This prevents the need for re-computation of value data and key data linked to previously computed tokens.

Despite the introduction of a cache to the LLM, the cache data is fully read, processed, and written during each iteration period of the LLM model. This leads to an increase in the sizes of the input and output dimensions of the LLM, resulting in significant latency. Moreover, cache outputs might be written and rewritten in the same memory address space. Consequently, the repeated rewriting of data in the same memory address space can introduce additional software overhead.

Therefore, designing an auto-regressive system for the LLM, which can decrease the input and output dimensions of the LLM, is a significant design challenge.

US 2023/177399 A1 discloses selective batching for inference system for transformer-based generation tasks.

### Summary

A method and a system according to the invention are defined in the independent claims. The dependent claims define preferred embodiments thereof. In an embodiment of the present invention, an auto-regressive method for a large language model (LLM) is disclosed. The auto-regressive method comprises receiving a hidden state associated with at least one token, generating key data, first value data, and query data according to a received hidden state, generating first positionally encoded key data by encoding the key data positionally, generating positionally encoded query data by encoding the query data positionally, performing first element-wise dot product operations according to the first positionally encoded key data, the positionally encoded query data, and second positionally encoded key data to generate an attention score, performing second element-wise dot product operations according to the first value data, the attention score, and second value data to generate an attention output, and adding the attention output and the hidden state to generate an updated hidden state. The second positionally encoded key data is obtained and cached before the first positionally encoded key data is generated. The second value data is obtained and cached before the first value data is generated.

In another embodiment of the present invention, an auto-regressive system for a LLM is disclosed. The auto-regressive system comprises a layer input module, a linear transformation module, a key positional encoder, a query positional encoder, a first multiplication module, a second multiplication module, and a first adder. The layer input module is configured to receive hidden state associated with at least one token processed by the LLM. The linear transformation module is configured to generate key data, first value data, and query data by performing linear transformations according to the hidden state received by the layer input module. The key positional encoder is configured to generate first positionally encoded key data by encoding the key data positionally. The query positional encoder is configured to generate positionally encoded query data by encoding the query data positionally. The first multiplication module is configured to perform first element-wise dot product operations according to the first positionally encoded key data, the positionally encoded query data, and second positionally encoded key data to generate an attention score. The second multiplication module is configured to perform second element-wise dot product operations according to the first value data, the attention score, and second value data to generate an attention output. The first adder is configured to add the attention output and the hidden state to generate an updated hidden state. The second positionally encoded key data is obtained and cached before the first positionally encoded key data is generated. The second value data is obtained and cached before the first value data is generated.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a block diagram of illustrating the partial operations of one transformer layer within an auto-regressive system according to an embodiment of the present invention, namely the self-attention mechanism within a transformer layer.
FIG.2 is a structure of the first multiplication module of the auto-regressive system in FIG.1.
FIG.3 is a structure of the second multiplication module of the auto-regressive system in FIG.1.
FIG.4 is an illustration of a first state of a ring buffer of the auto-regressive system in FIG.1.
FIG.5 is an illustration of a second state of the ring buffer of the auto-regressive system in FIG.1.
FIG.6 is an illustration of a third state of the ring buffer of the auto-regressive system in FIG.1.
FIG.7 is an illustration of a fourth state of the ring buffer of the auto-regressive system in FIG.1.
FIG.8 is a flow chart of performing an auto-regressive method for a transformer-based large language model by the auto-regressive system in FIG.1.

### Detailed Description

In auto-regressive systems like GPT (Generative Pre-trained Transformer) and other Transformer-based architectures, at least one token from the input sequence may be first converted into a hidden state which is associated with the at least one token and contain basic information about the at least one token. Then, the hidden state is processed through multiple transformer layers of the system. In the architecture of the disclosed system, each transformer layer incorporates an attention or self-attention mechanism that updates the hidden state of input tokens. This multi-layer processing ensures that the final output is informed by a comprehensive and nuanced understanding of the entire input sequence, leading to more accurate and contextually relevant results.

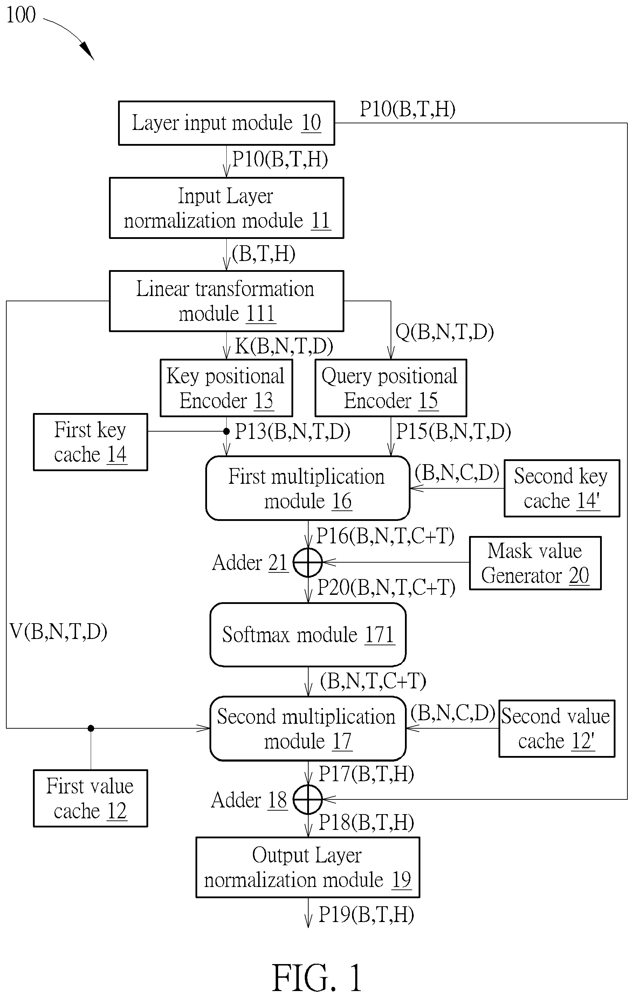

The partial operation of each transformer layer can be shown as FIG. 1, which is used to update hidden state. FIG.1 is a block diagram illustrating the partial operations of one transformer layer within an auto-regressive system 100 such as for a transformer-based large language model (LLM) according to an embodiment of the present invention. The LLM can be a type of Artificial Intelligence (AI) that can process and generate human language. For example, the LLM based on a neural network can perform an attention mechanism or a self-attention mechanism. The auto-regressive system 100 includes a layer input module 10, an input layer normalization module 11, a linear transformer module 111, a first value cache 12, a key positional encoder 13, a first key cache 14, a query positional encoder 15, a first multiplication module 16, a second multiplication module 17, a first adder 18, an output layer normalization module 19, a second key cache 14', a second value cache 12', and a softmax module 171. The layer input module 10 is configured to receive hidden state P10 which is a representation associated with at least one token processed by the LLM. It is noted that, the term "hidden state" typically refers to initial hidden state or the output of the intermediate layers during the processing of a sequence, which is well-known to those skilled in the art. The hidden state may take various forms, such as a vector, a matrix, etc. For ease of explanation and understanding, the embodiments illustrate the case where the hidden state is in the form of a matrix. Consequently, the hidden state received by the input layer module 10 can be described as an input feature matrix, wherein the input feature matrix is a numerical matrix and used to represent the features of the at least one token. However, it should be noted that the invention is not limited to this configuration. In the embodiment, the at least one token of the LMM can include a word, a symbol, or a phrase of segments split from a text file by the LMM. A signal format of the hidden state (interchangeably described as the input feature matrix) P10 can be floating-point numbers. The input layer normalization (or root mean square normalization) module 11 is linked to the layer input module 10 and configured to normalize the hidden state P10 to generate normalized hidden state. After normalization, the normalized hidden state may be processed by a linear transformation module 111 to generate key data (K), first value data (V), and query data (Q) respectively by performing linear transformations on the same normalized hidden state according to different weight matrices, wherein the key data (K), first value data (V), and query data (Q) may also be in the form of matrices. In another embodiment, the input layer normalization module 11 may be optional. For example, the input layer normalization (or root mean square normalization) module 11 can be omitted when the hidden state P10 inherently satisfies the power normalization constraint which its square sum is equal to a fixed number, accordingly. The key data (K), first value data (V), and query data (Q) are generated according to the hidden state P10. However, the present invention is not limited to this. It should be noted that, the derivation of key data (K), first value data (V), and query data (Q) is well-known to those skilled in the art. For example, they are generated through fully connected layers of a neural network. The focus of the present invention lies in the improvements made to the multiplication operations involving the key data K and the query data Q, as well as the improvements made to the multiplication operations involving attention weight and the first value data V. Therefore, no limitations are imposed on the generation of the key data (K), first value data (V), and query data (Q). Specifically, the first value data V, the key data K, and the query data Q are feature representations generated according to weight matrices and the normalized hidden state. They can be generated in different representations derived from the normalized hidden state by typically performing linear transformations, used to compute attention scores and weighted sums. For the purpose of clarification and understanding, the hidden state P10 can be described as having a shape of (B,T,H). B is the batch size. T is number of tokens. For example, it may indicate the quantity of the at least one token associated with the hidden state P10. H is a hidden size. Further, the first value data V, the key data K, and the query data Q can be described as having a shape of (B, N, T, D). N is the number of attention heads. D is the head dimension for each attention head. The Hidden size (H)=Number of attention heads (N)×Head dimension (D) for each attention head. It is understood that the meanings of these parameters B, T, H, N, D in the transformer-based architecture are well-known to those of ordinary skill in the art.

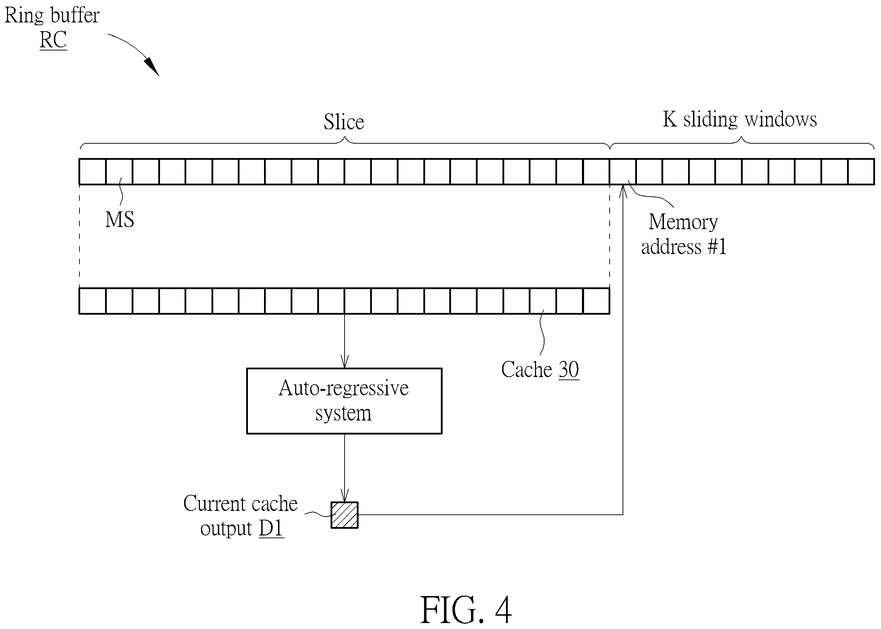

The first value cache 12 is linked to the linear transformation module 111 and configured to cache the first value data V. In another embodiment as shown in FIGs. 4-7, the first value cache 12 can be one part of a ring buffer. The ring buffer can be configured to further buffer second value data which is obtained and cached before the first value data V (can also referred as "value state"). For avoiding ambiguity, memory segment used for caching the second value data is called as a second value cache 12' hereafter. The first value cache 12 is used for caching the current computed value states (i.e., the first value data V), which are one of the outputs of the execution of one autoregressive inference pass of the transformer architecture. These value states are cached as to prevent redundant re-computation of the same value states in future autoregressive inference passes of the transformer layer. Past cached value states are re-introduced back into the transformer through the second value cache 12'. The caching mechanism for storing and retrieving past value caches can be of a ring buffer mechanism. The key positional encoder 13 is linked to the linear transformation module 111 and configured to encode the key data K positionally (i.e., applying positional encoding to the key data K) to generate first positionally encoded key data P13. The first key cache 14 is linked to the key positional encoder 13 and configured to cache the first positionally encoded key data P13. The query positional encoder 15 is linked to the linear transformation module 111 and configured to encode the query data Q positionally (i.e., applying positional encoding to the query data Q) to generate positionally encoded query data P15. Note that the first positionally encoded key data P13 and the positionally encoded query data P15 can be described as having a shape of (B, N, T, D). The first multiplication module 16 is linked to the key positional encoder 13 and the query positional encoder 15, and configured to perform element-wise dot product operations according to the first positionally encoded key data P13, the positionally encoded query data P15, and the second positionally encoded key data cached in the second key cache 14' to generate an attention score P16 having a shape of (B,N,T,C+T). C is a user-defined number previously determined. For example, it's used to determine the maximum size of cached past value/key information. C is typically much larger than T. Similarly, the first key cache 14 can be one part of a ring buffer. The ring buffer can be configured to further cache the second positionally encoded key data which is obtained and cached before the first positionally encoded key data P13 (can also referred as "key state"). For avoiding ambiguity, memory segment used for caching the second positionally encoded key data is called as a second key cache 14' hereafter. The first key cache 14 is used for caching the current computed key states (such as, the positionally encoded key data P13), which are one of the outputs of the execution of one autoregressive inference pass of the transformer architecture. These key states are cached as to prevent redundant re-computation of the same key states in future autoregressive inference passes of the transformer layer. Past cached key states are re-introduced back into the transformer through the second key cache 14'. The caching mechanism for storing and retrieving past key caches can be of a ring buffer mechanism.

The second multiplication module 17 is linked to the first value cache 12 and the first multiplication module 16 through the softmax module 171, and configured to firstly convert the attention score P16 into an attention weight based on a softmax function, wherein the attention weight is a representation of a probability distribution (for example, the attention score P16 is used as the input of the softmax function of the softmax module 171 for generating the attention weight), and then perform element-wise dot product operations according to the attention weight, the first value data V, and the second value data cached in the second value cache 12' to generate attention output P17 having a shape of (B, T, H). It is understood that the softmax module 171 can be omitted in another embodiment, for example, when the attention score P16 indicating element-wise probability expressed as: $\frac{exp \left({x}_{i}\right)}{{\sum }_{i = 1}^{R} exp \left({x}_{i}\right)}$

Here, *xᵢ* denotes an element of the attention score P16. R is an element amount of the attention score P16. The first adder 18 is linked to the second multiplication module 17 and the layer input module 10, and configured to add the hidden state (such as, the input feature matrix) P10 and the attention output P17 to generate weighted sum data P18 having a shape of (B, T, H), wherein the weighted sum data P18 can be regarded as an updated hidden state. The output layer normalization (or root mean square normalization) module 19 is linked to the first adder 18 and configured to normalize the weighted sum data P18 to generate updated and normalized hidden state P19. In another embodiment, the output layer normalization (or root mean square normalization) module 11 can be omitted. For example, when the weighted sum data P18 inherently satisfies the power normalization constraint which its square sum is equal to a fixed number (such as 1). As previously mentioned, the LLM can be formed by the plurality of transformer layers. Therefore, the auto-regressive system 100 can be applied to a multi-stage cascade processing flow. For example, the updated and normalized hidden state P19 of a current stage can be inputted to a layer input module 10 of a subsequent stage for further similar processing.

In the auto-regressive system 100, the size of the first value cache 12 and the size of the first key cache 14 are determined according to the parameter T, which is the number of tokens associated with the hidden token P10. For example, the signal shape format of the first value data V cached in the first value cache 12 is represented as (B,N,T,D). The signal shape format of the first positionally encoded key data P13 which will be cached in the first key cache 14 is represented as (B,N,T,D). For a fixed batch size B, a fixed number of heads N, a fixed head dimension D, the capacity requirement for the first key cache 12 and the capacity requirement for the first value cache 14 only depend on the number of tokens T associated with current state. Instead of introducing past key information, in the auto-regressive system 100, the current key information (such as the key data, the first positionally encoded key data) is not directly concatenated with the past key information. Similarly, instead of introducing past value information, in the auto-regressive system 100, the current value information (such as the first value data) is not directly concatenated with the past value information. Particularly, in conventional auto-regressive system, the dimension of directly concatenating the current key information and past key information is significantly increased, such as (B,N,C+T,D). The dimension of directly concatenating the current value information and past value information is significantly increased, such as (B,N,C+T,D), which leads to a huge amount of memory write operations, which is detrimental to the speed of LLM inference as LLMs are memory-bound by nature due to their huge parameter size, often in the billions of parameters. By using such architecture shown in FIG. 1, in the auto-regressive system 100, the cache sizes for outputting the first positionally encoded key data P13 cached in the first key cache 14 and the first value data V cached in the first value cache 12 can be reduced, resulting in faster model inference. Further, since the cache sizes for outputting the first positionally encoded key data P13 cached in the first key cache 14 and the first value data V cached in the first value cache 12 can be reduced, temporary model memory footprints can also be reduced. Moreover, a mask value generator 20 can be introduced to the auto-regressive system 100. The mask value generator 20 is linked to the first multiplication module 16 through a third adder 21, and configured to replace all null values of the attention score P16 with mask values generated by the mask value generator 20, to generate updated attention score P20. For example, the mask value can be set to "-∞" to replace the null value "0" for updating the attention score P16. In the auto-regressive system 100, the size of the updated and normalized hidden state P19 outputted from the output layer normalization (or root mean square normalization) module 19 depends on the number of tokens T of the layer input module 10. For example, the signal shape format of the hidden state P10 is represented as (B,T,H). The signal shape format of the updated and normalized hidden state P19 is represented as (B,T,H). B is the batch size. T is the number of tokens. H is the hidden size. It is understood that the hidden size (H) can be written as Number of attention heads (N)×Head dimension (D) for each attention head. As a result, for a fixed batch size B and a fixed head size H, since the size of the updated and normalized hidden state P19 outputted from the output layer normalization module 19 depends on the number of tokens T, the auto-regressive system 100 is appropriately used for applying to the multi-stage cascade pre-processing flow. In the following, details of a pairwise matrix multiplication modules applied to the first multiplication module 16 and the second multiplication module 17 are illustrated. It should be noted that the input layer normalization (or root mean square normalization) module 11, the mask value generator 20, the adder 21, the softmax module 171 and the output layer normalization (or root mean square normalization) module 19 in the FIG. 1 are optional. In other words, at least one of these modules can be removed from the FIG. 1 in other variant embodiments. Accordingly, a person of ordinary skill in the art will be informed of changes to the other variant embodiments based on the description of the disclosure. In addition, a similar auto-regressive method can also be obtained based on FIG. 1 and its variant embodiment, and the similar description is not explained in detail in the present disclosure.

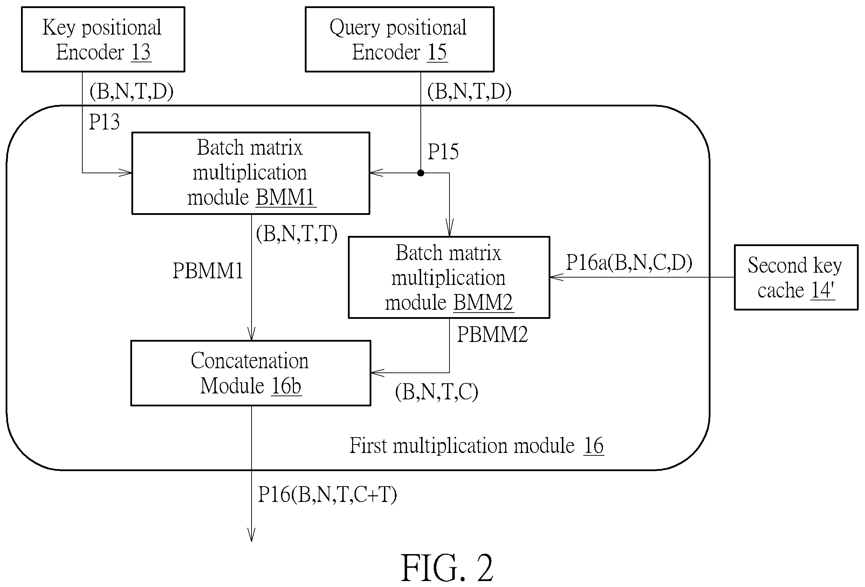

FIG.2 is a structure of the first multiplication module 16 of the auto-regressive system 100. The first multiplication module 16 includes a first batch matrix multiplication module BMM1, a second batch matrix multiplication module BMM2, and a concatenation module 16b. The first batch matrix multiplication module BMM1 is linked to the key positional encoder 13 and the query positional encoder 15, and configured to perform a first matrix dot product on the first positionally encoded key data P13 and the positionally encoded query data P15 to generate a first product output PBMM1 having a shape of (B,N,T,T). Here, the first positionally encoded key data P13 and the positionally encoded query data P15 can be in the form of matrices. The first product output PBMM1 can be a matrix generated by performing the matrix element-wise product of the first positionally encoded key data P13 and the positionally encoded query data P15. The second batch matrix multiplication module BMM2 is linked to the first batch matrix multiplication module BMM1 and a second key cache 14' configured to cache the second positionally encoded key data P16a having a shape of (B,N,C,D). As previously mentioned, the second key cache 14' and the first key cache 14 can share a common cache space. The second batch matrix multiplication module BMM2 is configured to perform a second matrix dot product on the second positionally encoded key data P16a and the positionally encoded query data P15 to generate a second product output PBMM2 having a shape of (B,N,T,C). Here, the second positionally encoded key data P16a and the positionally encoded query data P15 can be in the form of matrices. The second product output PBMM2 can be a matrix generated by performing the matrix element-wise product of the second positionally encoded key data P16a and the positionally encoded query data P15. The concatenation module 16b is linked to the first batch matrix multiplication module BMM1 and the second batch matrix multiplication module BMM2, and configured to concatenate the first product output PBMM1 and the second product output PBMM2 to generate the attention score P16 having a shape of (B,N,T,C+T). Here, the first product output PBMM1 and the second product output PBMM2 are in the form of matrices. As a result, the first product output PBMM1 and the second product output PBMM2 can be concatenated by expanding matrix dimensions.

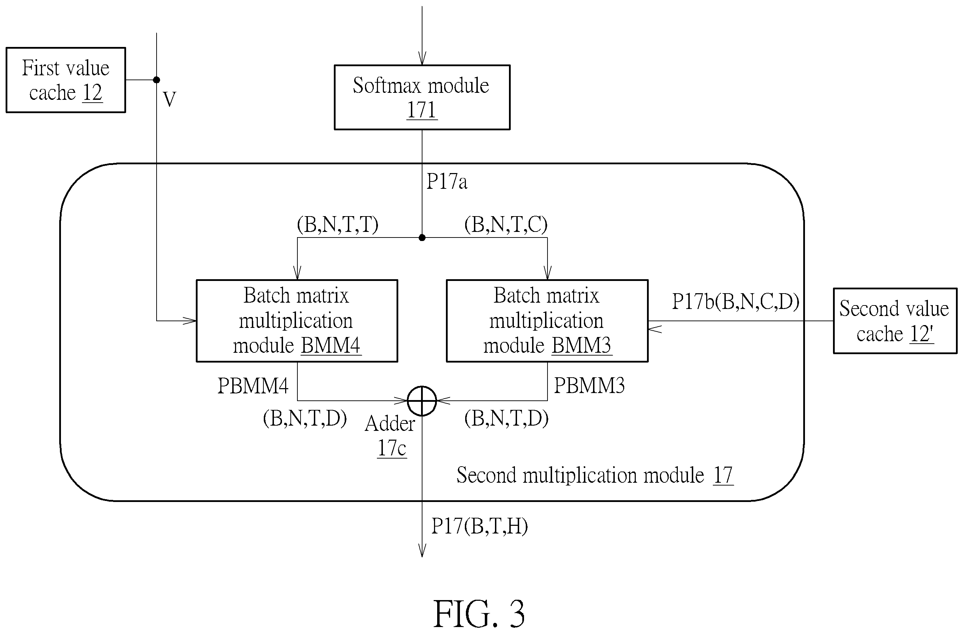

FIG.3 is a structure of the second multiplication module 17 of the auto-regressive system 100. The second multiplication module 17 includes a third batch matrix multiplication module BMM3, a fourth batch matrix multiplication module BMM4, and a second adder 17c. As previously mentioned, the second multiplication module 17 is linked to the softmax module 171 for processing the attention weight P17a outputted from the softmax module 171. By definition, the softmax function performed by the softmax module 171 can convert M real values into M normalized real values, wherein a sum of the M normalized real values is equal to one. In the second multiplication module 17, the third matrix multiplication module BMM3 is linked to the softmax module 171 and the second value cache 12' configured to cache second value data P17b. As previously mentioned, the second value cache 12' and the first value cache 12 can share a common cache space. The third batch matrix multiplication module BMM3 is configured to perform a third matrix dot product according to the attention weight P17a and the second value data P17b to generate a third product output PBMM3 having a shape of (B,N,T,D). Here, the attention weight P17a and the second value data P17b can be in the form of matrices. The third product output PBMM3 can be a matrix generated by performing the matrix element-wise product of the attention weight P17a and the second value data P17b. The fourth batch matrix multiplication module BMM4 is linked to the third batch matrix multiplication module BMM3and the first value cache 12, and configured to perform a fourth matrix dot product according to the attention weight P17a and the first value data V to generate a fourth product output PBMM4 having a shape of (B,N,T,D). Here, the attention weight P17a and the first value data V can be in the form of matrices. The fourth product output PBMM4 can be a matrix generated by performing the matrix element-wise product of the attention weight P17a and the first value data V. The second adder 17c is linked to the third batch matrix multiplication module BMM3 and the fourth batch matrix multiplication module BMM4, and configured to add the third product output PBMM3 and the fourth product output PBMM4. Finally, the second adder 17c outputs the attention output P17 having a shape of (B,T,H). In FIG.2 and FIG.3, it can be understood that the current cache data (such as the first value data V, the positionally encoded query data P15, and the first positionally encoded key data P13) and previous cache data (such as the second value data P17b and the second positionally encoded key data P16a) are introduced to the auto-regressive system 100 for improving data transaction efficiency. In order to further optimize utilization of memory capacity, a ring buffer mechanism is introduced to implement caches of the auto-regressive system 100, as illustrated below.

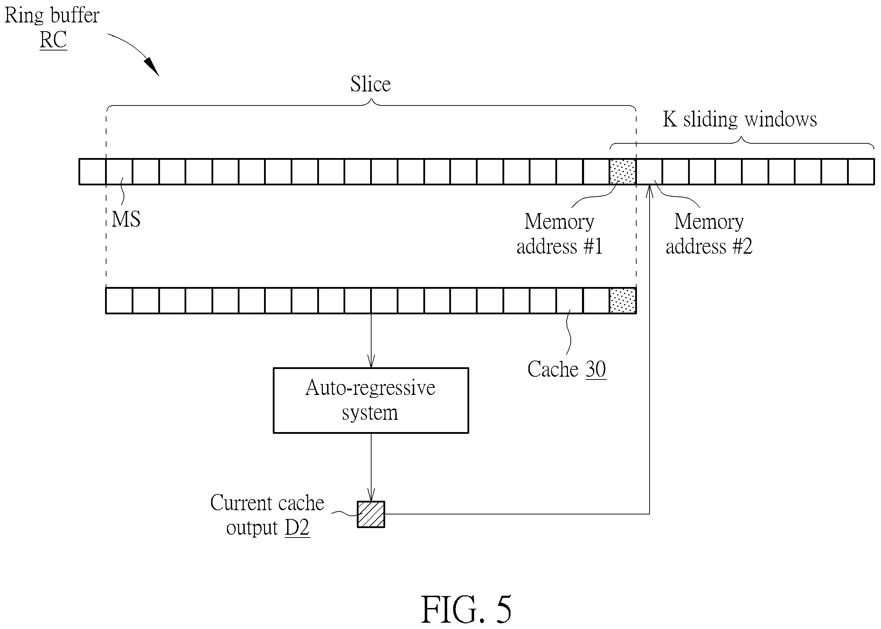

FIG.4 is an illustration of a first state of a ring buffer RC of the auto-regressive system 100. FIG.5 is an illustration of a second state of the ring buffer RC of the auto-regressive system 100. In the embodiment, the ring buffer RC can be a virtual memory structure established by a software program. In another embodiment, the ring buffer RC can be a physical memory circuit of the hardware. The ring buffer RC includes a plurality of memory segments MS. According to the invention, the second value cache 12' and/or the second key cache 14' is established by slicing a part of memory segments from the ring buffer RC. For example, the ring buffer RC includes 30 memory segments MS. The second value cache 12' and/or the second key cache 14' can be established by virtually slicing 20 memory segments from the ring buffer RC. The second value cache 12' and/or the second key cache 14' is used for caching "previous" cache data. Further, the first value cache 12 and/or the first key cache 14 is established by virtually slicing another part of memory segments from the ring buffer, e.g. by virtually slicing at least one memory segments from the ring buffer RC following the 20 memory segments allocated as the second value cache 12' and/or the second key cache 14'. For avoiding ambiguity, the second value cache 12' and/or the second key cache 14' is called as a cache 30 hereafter. In FIG.4, the part of memory segments (20 memory segments) of the plurality of memory segments (30 memory segments) are allocated for establishing the cache 30 (for example, the second value cache 12' and/or the second key cache 14'). Further, another part of memory segments (10 memory segments) of the plurality of memory segments are allocated as K sliding windows (K=10). Here, K is a positive integer. K is a predetermined integer associated with an overhead configuration of accessing data of the ring buffer RC. K sliding windows can be used for applying the first value cache 12 and/or the first key cache 14 for caching "current" cache data. For example, K is a user-defined integer. When K increases, the overhead of the ring buffer RC increases. When K decreased, the overhead of the ring buffer RC decreases.

As previously mentioned, in the embodiment, the second value cache 12' and/or the second key cache 14' can be established by slicing 20 memory segments from the ring buffer RC. The first value cache 12 and/or the first key cache 14 can be established by virtually slicing K memory segments from the ring buffer RC following the 20 memory segments allocated as the second value cache 12' and/or the second key cache 14'. In other words, the 20 slicing memory segments of the ring buffer RC are used for caching second value data P17b and/or second positionally encoded key data P16a. One memory segment of the K sliding windows of the ring buffer RC is used for caching "current" first value data V or first positionally encoded key data P13, called as D1, D2, DK, and D(K+1) hereafter.

In FIG.4, after a current cache output D1 is generated, the current cache output D1 is stored into an empty memory segment of the K sliding windows according to a k-th memory address. For example, in a first iteration, after the current cache output D1 is generated, the current cache output D1 can be stored into an empty memory segment according to a memory address #1. The memory address #1 corresponds to a first memory segment of the K sliding windows. Then, after the current cache output D1 is stored into the empty memory segment of the K sliding windows according to the k-th memory address, the part of memory segments (20 memory segments) of the ring buffer RC used for establishing the cache 30 can be shifted by incrementing an offset value for updating the cache 30. In FIG.5, 20 memory segments MS of the cache 30 can be shifted by incrementing an offset value (one memory segment offset value). Therefore, the current cache output D1 allocated according to the memory address #1 belongs to the cache 30. Similarly, after a current cache output D2 is generated, the current cache output D2 is stored into an empty memory segment of the K sliding windows according to a (k+1)-th memory address. For example, in a second iteration, after the current cache output D2 is generated, the current cache output D2 can be stored into an empty memory segment according to a memory address #2.

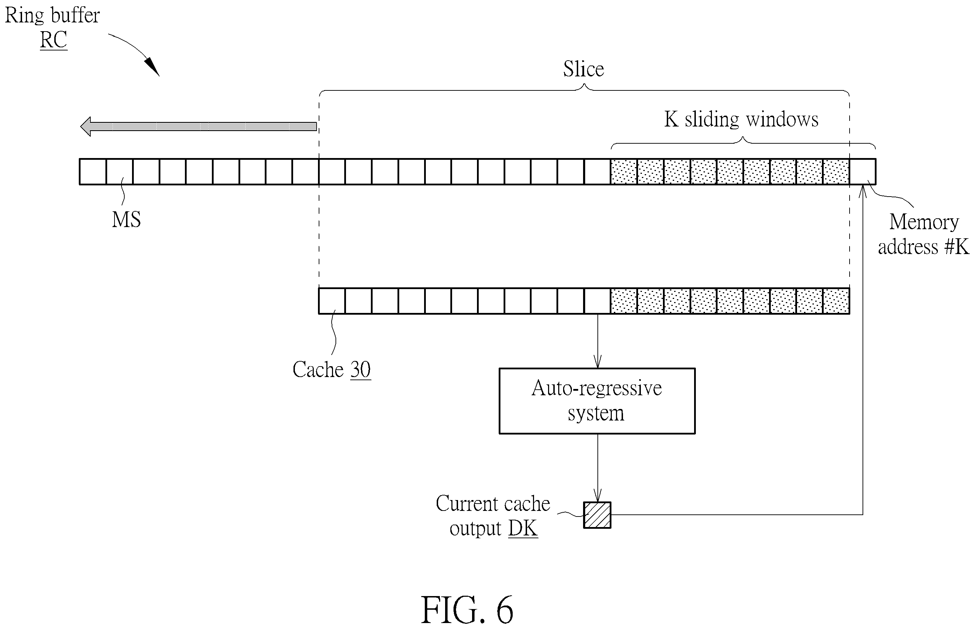

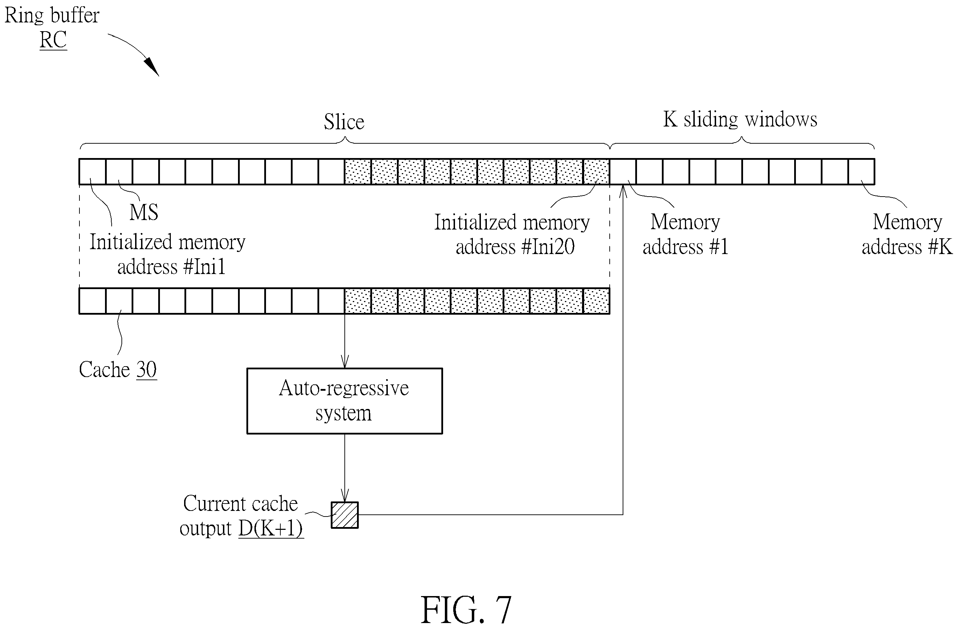

FIG.6 is an illustration of a third state of the ring buffer RC of the auto-regressive system 100. FIG.7 is an illustration of a fourth state of the ring buffer RC of the auto-regressive system 100. In FIG.6, when memory segments of the cache 30 are shifted to hit an end memory segment of the K sliding windows, the memory segments of the cache 30 are copied according to their initialized memory addresses. For example, in FIG.6, K sliding windows include K memory segments corresponding to memory address #1 to memory address #K. After the current cache output DK is generated, the current cache output DK can be stored into an empty memory segment according to the memory address #K. Then, the memory segments MS of the cache 30 can be shifted accordingly. Specifically, when the memory segments of the cache 30 are shifted to hit a memory segment having the memory address #K, it implies no additional memory segment of the K sliding windows can be used for caching "next" cache output. Therefore, in FIG.7, the memory segments of the cache 30 are copied to the first 20 memory segments of the ring buffer RC according to an initialized memory address #Ini1 to an initialized memory address #Ini20. After the memory segments of the cache 30 are copied, when the current cache output D(K+1) is generated, the current cache output D(K+1) can be stored into a memory segment of the K sliding windows according to the memory address #1. Since the ring buffer mechanism is introduced, the requirement of re-allocating address space for the cache output can be reduced, leading to optimized utilization of memory capacity.

FIG.4 to FIG.7 illustrate a process of updating the first positionally encoded key data and/or the first value data cached in the ring buffer RC. As previously mentioned, the part of memory segments corresponding the initialized memory address #Ini1 to the initialized memory address #Ini20 of the ring buffer RC can be updated by incrementing an offset value of memory addresses after the first value cache and/or a first key cache caches the current cache output. After the part of memory segments of the ring buffer are updated (i.e., for example, from the initialized memory address #Ini2 to the memory address #1), the part of memory segments can include the first value cache and/or a first key cache, and a part of second positionally encoded key data and/or a part of second value data. In other words, the second value data and/or the second positionally encoded key data can be updated after the part of memory segments are shifted.

In the auto-regressive system 100, any hardware or technology modification falls into the scope of the present invention. For example, the first value cache 12 and the first key cache 14 can be pre-allocated in an accelerated processing unit (APU) memory. The first value cache 12 and the first key cache 14 can be pre-allocated in a central processing unit (CPU) memory. The first value cache 12 and the first key cache 14 can be pre-allocated in a neural processing unit (NPU) memory. In another embodiment, the ring buffer RC can be pre-allocated in the APU memory or the CPU memory. The cache 30 can cache data in an array format. Alternatively, the cache 30 can cache data in a tuple format. Alternatively, the cache 30 can cache data in a tensor format.

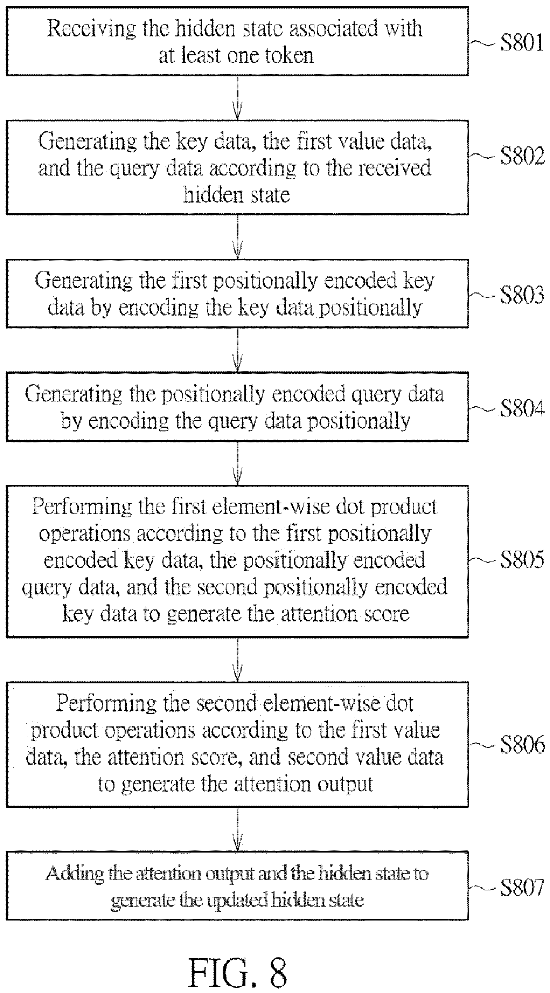

FIG.8 is a flow chart of performing an auto-regressive method for a transformer-based large language model (LLM) by the auto-regressive system 100. The auto-regressive method of the transformer-based LLM includes step S801 to step S807. Any hardware or technology modification falls into the scope of the present invention. Step S801 to step S807 are illustrated below.

| | |
|---|---|
| Step S801: | receiving the hidden state associated with at least one token; |
| Step S802: | generating the key data, the first value data, and the query data according to the received hidden state; |
| Step S803: | generating the first positionally encoded key data by encoding the key data positionally; |
| Step S804: | generating the positionally encoded query data by encoding the query data positionally; |
| Step S805: | performing the first element-wise dot product operations according to the first positionally encoded key data, the positionally encoded query data, and the second positionally encoded key data to generate the attention score; |
| Step S806: | performing the second element-wise dot product operations according to the first value data, the attention score, and second value data to generate the attention output; |
| Step S807: | adding the attention output and the hidden state to generate the updated hidden state. |

Details of step S801 to step S807 are previously illustrated. Thus, they are omitted here. In the auto-regressive system 100, the current key information is not directly concatenated with the past key information. Further, the current value information is not directly concatenated with the past value information. Therefore, the cache sizes for outputting the first positionally encoded key data cached in the first key cache and the first value data cached in the first value cache can be reduced. As a result, the model inference can be accelerated. The temporary model memory footprints can also be reduced.

To sum up, the present invention discloses an auto-regressive system for the LLM. The auto-regressive system incorporates caches to directly access value and key information once the current key/value projection calculation is finalized. Further, the cache sizes for outputting the first/second positionally encoded key data and the first/second value data can be reduced, thereby accelerating model inference. Since the cache sizes can be reduced, temporary model memory footprints can also be reduced. Since the cache sizes can be reduced, the amount of memory write accesses can also be reduced. Moreover, a ring buffer mechanism is introduced to the auto-regressive system. The implementation of the ring buffer mechanism reduces the need for re-allocating address space for cache output, leading to optimized utilization of memory capacity.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A computer-implemented auto-regressive method for a transformer-based large language model, in the following also referred to as LLM, the auto-regressive method comprising:
receiving a hidden state associated with at least one token (S801);
generating key data, first value data, and query data according to a received hidden state (S802);
generating first positionally encoded key data by encoding the key data positionally (S803);
generating positionally encoded query data by encoding the query data positionally (S804);
performing first element-wise dot product operations according to the first positionally encoded key data, the positionally encoded query data, and second positionally encoded key data to generate an attention score (S805);
performing second element-wise dot product operations according to the first value data, the attention score, and second value data to generate an attention output (S806); and
adding the attention output and the hidden state to generate an updated hidden state (S807);
wherein the second positionally encoded key data is obtained and cached before the first positionally encoded key data is generated, and the second value data is obtained and cached before the first value data is generated,
wherein the method further comprises:
slicing a part of memory segments from a ring buffer as sliding windows to generate a first value cache and/or a first key cache; and
slicing another part of memory segments from the ring buffer to generate a second value cache and/or a second key cache, and
wherein the first value cache is configured to save the first value data, the second value cache is configured to save the second value data, the first key cache is configured to save the first positionally encoded key data, and the second key cache is configured to save the second positionally encoded key data.

2. The method of claim 1, wherein performing first element-wise dot product operations according to the first positionally encoded key data, the positionally encoded query data, and the second positionally encoded key data to generate an attention score comprises:
performing a first matrix dot product on the first positionally encoded key data and the positionally encoded query data to generate a first product output;
performing a second matrix dot product on the second positionally encoded key data and the positionally encoded query data to generate a second product output; and
concatenating the first product output and the second product output to generate the attention score.

3. The method of claim 1 or 2, wherein performing second element-wise dot product operations according to the first value data, the attention score, and second value data to generate an attention output comprises:
performing a third matrix dot product according to the attention score and the second value data to generate a third product output;
performing a fourth matrix dot product according to the attention score and the first value data to generate a fourth product output; and
adding the third product output and the fourth product output to generate the attention output.

4. The method of any one of claims 1 to 3, further comprising:
performing a softmax function to the attention score for generating an attention weight, wherein the second element-wise dot product operations are performed according to the first value data, the attention weight, and the second value data to generate the attention output.

5. The method of any one of claims 1 to 4, further comprising:
normalizing the hidden state as a normalized hidden state by adjusting a square sum of elements of the hidden state equal to a fixed number, wherein the key data, the first value data, and the query data are generated according to the normalized hidden state; and
normalizing the updated hidden state as a normalized updated hidden state by adjusting a square sum of elements of the updated hidden state equal to the fixed number.

6. The method of any one of claims 1 to 5, further comprising:
shifting another part of memory segments from the ring buffer by incrementing an offset value of memory addresses after the first value data and/or a first key data is saved;
wherein after another part of memory segments from the ring buffer are shifted, the second value data and/or the second positionally encoded key data are updated, wherein the updated second value data comprises the first value data and a part of the second value data, and/or, the updated second positionally encoded key data comprises the first positionally encoded key data and a part of the second positionally encoded key data.

7. The method of claim 6, further comprising:
copying another part of memory segments of the ring buffer according to their initialized memory addresses after another part of memory segments are shifted to hit an end memory segment of the ring buffer.

8. The method of any one of claims 1 to 7, further comprising:
replacing null values of the attention score with mask values to generate an updated attention score.

9. An auto-regressive system for a transformer-based large language model, in the following also referred to as LLM, the auto-regressive system comprising:
a layer input module (10), configured to receive hidden state associated with at least one token processed by the LLM;
a linear transformation module (111), configured to generate key data, first value data, and query data by performing linear transformations according to the hidden state received by the layer input module;
a key positional encoder (13), configured to generate first positionally encoded key data by encoding the key data positionally;
a query positional encoder (15), configured to generate positionally encoded query data by encoding the query data positionally;
a first multiplication module (16), configured to perform first element-wise dot product operations according to the first positionally encoded key data, the positionally encoded query data, and second positionally encoded key data to generate an attention score;
a second multiplication module (17), configured to perform second element-wise dot product operations according to the first value data, the attention score, and second value data to generate an attention output; and
a first adder (18), configured to add the attention output and the hidden state to generate an updated hidden state;
wherein the second positionally encoded key data is obtained and cached before the first positionally encoded key data is generated, and the second value data is obtained and cached before the first value data is generated,
wherein the system further comprises:
a ring buffer (RC), configured to save the first value data, the second value data, the first positionally encoded key data, and the second positionally encoded key data, and
wherein a part of memory segments of the ring buffer (RC) are sliced to generate a first value cache (12) and/or a first key cache (14), another part of memory segments of the ring buffer (RC) are sliced to generate a second value cache (12') and/or a second key cache (14'), the first value cache (12) is configured to save the first value data, the second value cache (12') is configured to save the second value data, the first key cache (14) is configured to save the first positionally encoded key data, and the second key cache (14') is configured to save the second positionally encoded key data.

10. The system of claim 9, wherein the first multiplication module (16) comprises:
a first batch matrix multiplication module (BMM1), configured to perform a first matrix dot product on the first positionally encoded key data and the positionally encoded query data to generate a first product output;
a second batch matrix multiplication module (BMM2), configured to perform a second matrix dot product on the second positionally encoded key data and the positionally encoded query data to generate a second product output; and
a concatenation module (16b), configured to concatenate the first product output and the second product output to generate the attention score.

11. The system of claim 9 or 10,
wherein the second multiplication module (17) comprises:
a third batch matrix multiplication module (BMM3), configured to perform a third matrix dot product according to the attention score and the second value data to generate a third product output,
a fourth batch matrix multiplication module (BMM4), configured to perform a fourth matrix dot product according to the attention score and the first value data to generate a fourth product output, and
a second adder (17c), configured to add the third product output and the fourth product output to generate the attention output; and/or
wherein the system further comprises:
a softmax module (171), configured to perform a softmax function to the attention score to generate an attention weight to the second multiplication module, wherein the second element-wise dot product operations are performed according to the first value data, the attention weight, and the second value data to generate the attention output, and/or
a mask value generator (20) and a third adder (21), configured to replace null values of the attention score with mask values generated by the mask value generator to generate an updated attention score.

12. The system of any one of claims 9 to 11, further comprising:
an input layer normalization module (11), configured to normalize the hidden state as a normalized hidden state by adjusting a square sum of elements of the hidden state equal to a fixed number; and
an output layer normalization module (19), configured to normalize the updated hidden state as a normalized updated hidden state by adjusting a square sum of elements of the updated hidden state equal to the fixed number.

13. The system of any one of claims 9 to 12,
wherein another part of memory segments from the ring buffer (RC) are shifted by incrementing an offset value of memory addresses after the first value data and/or the first key data is saved, after another part of memory segments from the ring buffer (RC) are shifted, the second value data and/or the second positionally encoded key data are updated, wherein the updated second value data comprises the first value data and a part of the second value data , and/or, the updated second positionally encoded key data comprises the first positionally encoded key data and a part of the second positionally encoded key data;
wherein preferably another part of memory segments of the ring buffer (RC) are copied according to their initialized memory addresses after another part of memory segments are shifted to hit an end memory segment of the ring buffer (RC).

14. The method of any one of claims 1 to 8, or the system of any one of claims 9 to 13, wherein a signal shape format of the first value data and the first positionally encoded key data is represented as (B,N,T,D), a signal shape format of the second value data and the second positionally encoded key data is represented as (B,N,C,D), B is a batch size, T is a token amount, N is an attention head amount, D is a head dimension for each attention head, and C is a user-defined number previously determined.

## Patentansprüche

1. Computerimplementiertes autoregressives Verfahren für ein transformerbasiertes Large Language Modell, im Folgenden auch als LLM bezeichnet, wobei das autoregressive Verfahren Folgendes umfasst:
Empfangen eines verborgenen Zustands, der mindestens einem Token zugeordnet ist (S801);
Erzeugen von Schlüsseldaten, ersten Wertdaten und Abfragedaten gemäß einem empfangenen verborgenen Zustand (S802);
Erzeugen erster positionscodierter Schlüsseldaten durch Positionscodieren der Schlüsseldaten (S803);
Erzeugen positionscodierter Abfragedaten durch Positionscodieren der Abfragedaten (S804);
Durchführen erster elementweiser Skalarproduktoperationen gemäß den ersten positionscodierten Schlüsseldaten, den positionscodierten Abfragedaten und zweiten positionscodierten Schlüsseldaten, um eine Aufmerksamkeitsbewertung zu erzeugen (S805);
Durchführen zweiter elementweiser Skalarproduktoperationen gemäß den ersten Wertdaten, der Aufmerksamkeitsbewertung und zweiten Wertdaten, um eine Aufmerksamkeitsausgabe zu erzeugen (S806); und
Hinzufügen der Aufmerksamkeitsausgabe und des verborgenen Zustands, um einen aktualisierten verborgenen Zustand zu erzeugen (S807);
wobei die zweiten positionscodierten Schlüsseldaten erhalten und zwischengespeichert werden, bevor die ersten positionscodierten Schlüsseldaten erzeugt werden, und die zweiten Wertdaten erhalten und zwischengespeichert werden, bevor die ersten Wertdaten erzeugt werden,
wobei das Verfahren ferner Folgendes umfasst:
Ausschneiden eines Teils von Speichersegmenten aus einem Ringpuffer als Gleitfenster, um einen ersten Wertzwischenspeicher und/oder einen ersten Schlüsselzwischenspeicher zu erzeugen; und
Ausschneiden eines anderen Teils von Speichersegmenten aus dem Ringpuffer, um einen zweiten Wertzwischenspeicher und/oder einen zweiten Schlüsselzwischenspeicher zu erzeugen, und
wobei der erste Wertzwischenspeicher konfiguriert ist, um die ersten Wertdaten zu speichern, der zweite Wertzwischenspeicher konfiguriert ist, um die zweiten Wertdaten zu speichern, der erste Schlüsselzwischenspeicher konfiguriert ist, um die ersten positionscodierten Schlüsseldaten zu speichern, und der zweite Schlüsselzwischenspeicher konfiguriert ist, um die zweiten positionscodierten Schlüsseldaten zu speichern.

2. Verfahren nach Anspruch 1, wobei das Durchführen erster elementweiser Skalarproduktoperationen gemäß den ersten positionscodierten Schlüsseldaten, den positionscodierten Abfragedaten und den zweiten positionscodierten Schlüsseldaten, um eine Aufmerksamkeitsbewertung zu erzeugen, Folgendes umfasst:
Durchführen eines ersten Matrixskalarprodukts an den ersten positionscodierten Schlüsseldaten und den positionscodierten Abfragedaten, um eine erstes-Produkt-Ausgabe zu erzeugen;
Durchführen eines zweiten Matrixskalarprodukts an den zweiten positionscodierten Schlüsseldaten und den positionscodierten Abfragedaten, um eine zweites-Produkt-Ausgabe zu erzeugen; und
Verketten der erstes-Produkt-Ausgabe und der zweites-Produkt-Ausgabe, um die Aufmerksamkeitsbewertung zu erzeugen.

3. Verfahren nach Anspruch 1 oder 2, wobei das Durchführen zweiter elementweiser Skalarproduktoperationen gemäß den ersten Wertdaten, der Aufmerksamkeitsbewertung und zweiten Wertdaten, um eine Aufmerksamkeitsausgabe zu erzeugen, Folgendes umfasst:
Durchführen eines dritten Matrixskalarprodukts gemäß der Aufmerksamkeitsbewertung und den zweiten Wertdaten, um eine drittes-Produkt-Ausgabe zu erzeugen;
Durchführen eines vierten Matrixskalarprodukts gemäß der Aufmerksamkeitsbewertung und den ersten Wertdaten, um eine viertes-Produkt-Ausgabe zu erzeugen; und
Addieren der drittes-Produkt-Ausgabe und der viertes-Produkt-Ausgabe, um die Aufmerksamkeitsausgabe zu erzeugen.

4. Verfahren nach einem der Ansprüche 1 bis 3, ferner umfassend:
Durchführen einer Softmax-Funktion an der Aufmerksamkeitsbewertung zum Erzeugen eines Aufmerksamkeitsgewichts, wobei die zweiten elementweisen Skalarproduktoperationen gemäß den ersten Wertdaten, dem Aufmerksamkeitsgewicht und den zweiten Wertdaten durchgeführt werden, um die Aufmerksamkeitsausgabe zu erzeugen.

5. Verfahren nach einem der Ansprüche 1 bis 4, ferner umfassend:
Normalisieren des verborgenen Zustands als einen normalisierten verborgenen Zustand durch Anpassen einer Quadratsumme von Elementen des verborgenen Zustands gleich einer festen Zahl, wobei die Schlüsseldaten, die ersten Wertdaten und die Abfragedaten gemäß dem normalisierten verborgenen Zustand erzeugt werden; und
Normalisieren des aktualisierten verborgenen Zustands als einen normalisierten aktualisierten verborgenen Zustand durch Anpassen einer Quadratsumme von Elementen des aktualisierten verborgenen Zustands gleich der festen Zahl.

6. Verfahren nach einem der Ansprüche 1 bis 5, ferner umfassend:
Verschieben eines anderen Teils von Speichersegmenten aus dem Ringpuffer durch Inkrementieren eines Versatzwerts von Speicheradressen, nachdem die ersten Wertdaten und/oder erste Schlüsseldaten gespeichert wurden;
wobei, nachdem ein anderer Teil von Speichersegmenten aus dem Ringpuffer verschoben wurde, die zweiten Wertdaten und/oder die zweiten positionscodierten Schlüsseldaten aktualisiert werden, wobei die aktualisierten zweiten Wertdaten die ersten Wertdaten und einen Teil der zweiten Wertdaten umfassen, und/oder die aktualisierten zweiten positionscodierten Schlüsseldaten die ersten positionscodierten Schlüsseldaten und einen Teil der zweiten positionscodierten Schlüsseldaten umfassen.

7. Verfahren nach Anspruch 6, ferner umfassend:
Kopieren eines anderen Teils von Speichersegmenten des Ringpuffers gemäß ihren initialisierten Speicheradressen, nachdem ein anderer Teil von Speichersegmenten verschoben wurde, um ein Endspeichersegment des Ringpuffers zu treffen.

8. Verfahren nach einem der Ansprüche 1 bis 7, ferner umfassend:
Ersetzen von Nullwerten der Aufmerksamkeitsbewertung durch Maskenwerte, um eine aktualisierte Aufmerksamkeitsbewertung zu erzeugen.

9. Autoregressives System für ein transformerbasiertes Large Language Modell, im Folgenden auch als LLM bezeichnet, wobei das autoregressive System Folgendes umfasst:
ein Schichteingabemodul (10), das konfiguriert ist, um einen verborgenen Zustand zu empfangen, der mindestens einem durch das LLM verarbeiteten Token zugeordnet ist;
ein Lineartransformationsmodul (111), das konfiguriert ist, um Schlüsseldaten, erste Wertdaten und Abfragedaten durch Durchführen linearer Transformationen gemäß dem durch das Schichteingabemodul empfangenen verborgenen Zustand zu erzeugen;
einen Schlüsselpositionscodierer (13), der konfiguriert ist, um erste positionscodierte Schlüsseldaten durch Positionscodieren der Schlüsseldaten zu erzeugen;
einen Abfragepositionscodierer (15), der konfiguriert ist, um positionscodierte Abfragedaten durch Positionscodieren der Abfragedaten zu erzeugen;
ein erstes Multiplikationsmodul (16), das konfiguriert ist, um erste elementweise Skalarproduktoperationen gemäß den ersten positionscodierten Schlüsseldaten, den positionscodierten Abfragedaten und zweiten positionscodierten Schlüsseldaten durchzuführen, um eine Aufmerksamkeitsbewertung zu erzeugen;
ein zweites Multiplikationsmodul (17), das konfiguriert ist, um zweite elementweise Skalarproduktoperationen gemäß den ersten Wertdaten, der Aufmerksamkeitsbewertung und zweiten Wertdaten durchzuführen, um eine Aufmerksamkeitsausgabe zu erzeugen; und
einen ersten Addierer (18), der konfiguriert ist, um die Aufmerksamkeitsausgabe und den verborgenen Zustand zu addieren, um einen aktualisierten verborgenen Zustand zu erzeugen;
wobei die zweiten positionscodierten Schlüsseldaten erhalten und zwischengespeichert werden, bevor die ersten positionscodierten Schlüsseldaten erzeugt werden, und die zweiten Wertdaten erhalten und zwischengespeichert werden, bevor die ersten Wertdaten erzeugt werden,
wobei das System ferner Folgendes umfasst:
einen Ringpuffer (RC), der konfiguriert ist, um die ersten Wertdaten, die zweiten Wertdaten, die ersten positionscodierten Schlüsseldaten und die zweiten positionscodierten Schlüsseldaten zu speichern, und
wobei ein Teil von Speichersegmenten des Ringpuffers (RC) ausgeschnitten wird, um einen ersten Wertzwischenspeicher (12) und/oder einen ersten Schlüsselzwischenspeicher (14) zu erzeugen, ein anderer Teil von Speichersegmenten des Ringpuffers (RC) ausgeschnitten wird, um einen zweiten Wertzwischenspeicher (12') und/oder einen zweiten Schlüsselzwischenspeicher (14') zu erzeugen, der erste Wertzwischenspeicher (12) konfiguriert ist, um die ersten Wertdaten zu speichern, der zweite Wertzwischenspeicher (12') konfiguriert ist, um die zweiten Wertdaten zu speichern, der erste Schlüsselzwischenspeicher (14) konfiguriert ist, um die ersten positionscodierten Schlüsseldaten zu speichern, und der zweite Schlüsselzwischenspeicher (14') konfiguriert ist, um die zweiten positionscodierten Schlüsseldaten zu speichern.

10. System nach Anspruch 9, wobei das erste Multiplikationsmodul (16) Folgendes umfasst:
ein erstes Stapelmatrixmultiplikationsmodul (BMM1), das konfiguriert ist, um ein erstes Matrixskalarprodukt an den ersten positionscodierten Schlüsseldaten und den positionscodierten Abfragedaten durchzuführen, um eine erstes-Produkt-Ausgabe zu erzeugen;
ein zweites Stapelmatrixmultiplikationsmodul (BMM2), das konfiguriert ist, um ein zweites Matrixskalarprodukt an den zweiten positionscodierten Schlüsseldaten und den positionscodierten Abfragedaten durchzuführen, um eine zweites-Produkt-Ausgabe zu erzeugen; und
ein Verkettungsmodul (16b), das konfiguriert ist, um die erstes-Produkt-Ausgabe und die zweites-Produkt-Ausgabe zu verketten, um die Aufmerksamkeitsbewertung zu erzeugen.

11. System nach Anspruch 9 oder 10,
wobei das zweite Multiplikationsmodul (17) Folgendes umfasst:
ein drittes Stapelmatrixmultiplikationsmodul (BMM3), das konfiguriert ist, um ein drittes Matrixskalarprodukt gemäß der Aufmerksamkeitsbewertung und den zweiten Wertdaten durchzuführen, um eine drittes-Produkt-Ausgabe zu erzeugen,
ein viertes Stapelmatrixmultiplikationsmodul (BMM4), das konfiguriert ist, um ein viertes Matrixskalarprodukt gemäß der Aufmerksamkeitsbewertung und den ersten Wertdaten durchzuführen, um eine viertes-Produkt-Ausgabe zu erzeugen, und
einen zweiten Addierer (17c), der konfiguriert ist, um die drittes-Produkt-Ausgabe und die viertes-Produkt-Ausgabe zu addieren, um die Aufmerksamkeitsausgabe zu erzeugen; und/oder
wobei das System ferner Folgendes umfasst:
ein Softmax-Modul (171), das konfiguriert ist, um eine Softmax-Funktion an der Aufmerksamkeitsbewertung durchzuführen, um ein Aufmerksamkeitsgewicht für das zweite Multiplikationsmodul zu erzeugen, wobei die zweiten elementweisen Skalarproduktoperationen gemäß den ersten Wertdaten, dem Aufmerksamkeitsgewicht und den zweiten Wertdaten durchgeführt werden, um die Aufmerksamkeitsausgabe zu erzeugen, und/oder
einen Maskenwertgenerator (20) und einen dritten Addierer (21), die konfiguriert sind, um Nullwerte der Aufmerksamkeitsbewertung durch Maskenwerte zu ersetzen, die durch den Maskenwertgenerator erzeugt werden, um eine aktualisierte Aufmerksamkeitsbewertung zu erzeugen.

12. System nach einem der Ansprüche 9 bis 11, ferner umfassend:
ein Eingabeschicht-Normalisierungsmodul (11), das konfiguriert ist, um den verborgenen Zustand als einen normalisierten verborgenen Zustand durch Anpassen einer Quadratsumme von Elementen des verborgenen Zustands gleich einer festen Zahl zu normalisieren; und
ein Ausgabeschicht-Normalisierungsmodul (19), das konfiguriert ist, um den aktualisierten verborgenen Zustand als einen normalisierten aktualisierten verborgenen Zustand durch Anpassen einer Quadratsumme von Elementen des aktualisierten verborgenen Zustands gleich der festen Zahl zu normalisieren.

13. System nach einem der Ansprüche 9 bis 12,
wobei ein anderer Teil von Speichersegmenten aus dem Ringpuffer (RC) durch Inkrementieren eines Versatzwerts von Speicheradressen verschoben wird, nachdem die ersten Wertdaten und/oder die ersten Schlüsseldaten gespeichert wurden, nachdem ein anderer Teil von Speichersegmenten aus dem Ringpuffer (RC) verschoben wurde, die zweiten Wertdaten und/oder die zweiten positionscodierten Schlüsseldaten aktualisiert werden, wobei die aktualisierten zweiten Wertdaten die ersten Wertdaten und einen Teil der zweiten Wertdaten umfassen, und/oder die aktualisierten zweiten positionscodierten Schlüsseldaten die ersten positionscodierten Schlüsseldaten und einen Teil der zweiten positionscodierten Schlüsseldaten umfassen;
wobei vorzugsweise ein anderer Teil von Speichersegmenten des Ringpuffers (RC) gemäß ihren initialisierten Speicheradressen kopiert wird, nachdem ein anderer Teil von Speichersegmenten verschoben wurde, um ein Endspeichersegment des Ringpuffers (RC) zu treffen.

14. Verfahren nach einem der Ansprüche 1 bis 8 oder System nach einem der Ansprüche 9 bis 13, wobei ein Signalformformat der ersten Wertdaten und der ersten positionscodierten Schlüsseldaten als (B,N,T,D) dargestellt wird, ein Signalformformat der zweiten Wertdaten und der zweiten positionscodierten Schlüsseldaten als (B,N,C,D) dargestellt wird, B eine Stapelgröße ist, T eine Tokenmenge ist, N eine Aufmerksamkeitskopfmenge ist, D eine Kopfdimension für jeden Aufmerksamkeitskopf ist und C eine zuvor bestimmte benutzerdefinierte Zahl ist.

## Revendications

1. Procédé auto-régressif mis en œuvre par ordinateur pour un grand modèle de langage, ci-après également appelé LLM, basé sur transformeur, le procédé auto-régressif comprenant :
la réception d'un état caché associé à au moins un jeton (S801) ;
la génération de données de clé, de premières données de valeur et de données d'interrogation en fonction d'un état caché reçu (S802) ;
la génération de premières données de clé codées en position en codant les données de clé en position (S803) ;
la génération de données d'interrogation codées en position en codant les données d'interrogation en position (S804) ;
l'exécution de premières opérations de produit scalaire par élément en fonction des premières données de clé codées en position, des données d'interrogation codées en position et des secondes données de clé codées en position pour générer un score d'attention (S805) ;
l'exécution de secondes opérations de produit scalaire par élément en fonction des premier données de valeur, du score d'attention et des secondes données de valeur pour générer une sortie d'attention (S806) ; et
l'ajout de la sortie d'attention et de l'état caché pour générer un état caché mis à jour (S807) ;
dans lequel les second données de clé codées en position sont obtenues et mises en cache avant que les premières données de clé codées en position ne soient générées, et les secondes données de valeur sont obtenues et mises en cache avant que les premières données de valeur ne soient générées,
dans lequel le procédé comprend en outre :
le découpage d'une partie de segments de mémoire à partir d'une mémoire tampon en anneau sous forme de fenêtres glissantes pour générer une première mémoire cache de valeur et/ou une première mémoire cache de clé ; et
le découpage d'une autre partie de segments de mémoire à partir de la mémoire tampon en anneau pour générer une seconde mémoire cache de valeur et/ou une seconde mémoire cache de clé, et
dans lequel la première mémoire cache de valeur est configurée pour sauvegarder les premières données de valeur, la seconde mémoire cache de valeur est configurée pour sauvegarder les secondes données de valeur, la première mémoire cache de clé est configurée pour sauvegarder les premières données de clé codées en position, et la seconde mémoire cache de clé est configurée pour sauvegarder les secondes données de clé codées en position.

2. Procédé selon la revendication 1, dans lequel l'exécution des premières opérations de produit scalaire par élément en fonction des premières données de clé codées en position, des données d'interrogation codées en position et des secondes données de clé codées en position pour générer un score d'attention comprend :
l'exécution d'un première produit scalaire matriciel sur les premières données de clé codées en position et les données d'interrogation codées en position pour générer une sortie de première produit ;
l'exécution d'un second produit scalaire matriciel sur les secondes données de clé codées en position et les données d'interrogation codées en position pour générer une sortie de seconde produit ; et
la concaténation de la sortie de première produit et de la sortie de seconde produit pour générer le score d'attention.

3. Procédé selon la revendication 1 ou 2, dans lequel l'exécution des secondes opérations de produit scalaire par élément en fonction des premières données de valeur, du score d'attention et des secondes données de valeur pour générer une sortie d'attention comprend :
l'exécution d'un troisième produit scalaire matriciel en fonction du score d'attention et des secondes données de valeur pour générer une sortie de troisième produit ;
l'exécution d'un quatrième produit scalaire matriciel en fonction du score d'attention et des premières données de valeur pour générer une sortie de quatrième produit ; et
l'addition de la sortie de troisième produit et de la sortie de quatrième produit pour générer la sortie d'attention.

4. Procédé selon l'une quelconque des revendications 1 à 3, comprenant en outre :
l'exécution d'une fonction softmax sur le score d'attention pour générer un poids d'attention, dans lequel les secondes opérations de produit scalaire par élément sont exécutées en fonction des premières données de valeur, du poids d'attention et des secondes données de valeur pour générer la sortie d'attention.

5. Procédé selon l'une quelconque des revendications 1 à 4, comprenant en outre :
la normalisation de l'état caché en tant qu'état caché normalisé en ajustant une somme des carrés d'éléments de l'état caché égale à un nombre fixe, dans lequel les données de clé, les premières données de valeur et les données d'interrogation sont générées en fonction de l'état caché normalisé ; et
la normalisation de l'état caché mis à jour en tant qu'état caché mis à jour normalisé en ajustant une somme des carrés d'éléments de l'état caché mis à jour égale au nombre fixe.

6. Procédé selon l'une quelconque des revendications 1 à 5, comprenant en outre :
le décalage d'une autre partie de segments de mémoire à partir de la mémoire tampon en anneau en incrémentant une valeur de décalage d'adresses de mémoire après que les premières données de valeur et/ou une première donnée de clé ont été sauvegardées ;
dans lequel, après qu'une autre partie de segments de mémoire à partir de la mémoire tampon en anneau ont été décalées, les secondes données de valeur et/ou les secondes données de clé codées en position sont mises à jour, dans lequel les secondes données de valeur mises à jour comprennent les premières données de valeur et une partie des secondes données de valeur, et/ou, les secondes données de clé codées en position mises à jour comprennent les premières données de clé codées en position et une partie des secondes données de clé codées en position.

7. Procédé selon la revendication 6, comprenant en outre :
la copie d'une autre partie de segments de mémoire de la mémoire tampon en anneau selon leurs adresses de mémoire initialisées après qu'une autre partie de segments de mémoire ont été décalées pour atteindre un segment de mémoire de fin de la mémoire tampon en anneau.

8. Procédé selon l'une quelconque des revendications 1 à 7, comprenant en outre :
le remplacement de valeurs nulles du score d'attention par des valeurs de masque pour générer un score d'attention mis à jour.

9. Système auto-régressif pour un grand modèle de langage, ci-après également appelé LLM, basé sur transformeur, le système auto-régressif comprenant :
un module d'entrée de couche (10), configuré pour recevoir un état caché associé à au moins un jeton traité par le LLM ;
un module de transformation linéaire (111), configuré pour générer des données de clé, des premières données de valeur et des données d'interrogation en effectuant des transformations linéaires en fonction de l'état caché reçu par le module d'entrée de couche ;
un codeur de position de clé (13), configuré pour générer des premières données de clé codées en position en codant les données de clé en position ;
un codeur de position d'interrogation (15), configuré pour générer des données d'interrogation codées en position en codant les données d'interrogation en position ;
un premier module de multiplication (16), configuré pour effectuer des premières opérations de produit scalaire par élément en fonction des premières données de clé codées en position, des données d'interrogation codées en position et des secondes données de clé codées en position pour générer un score d'attention ;
un second module de multiplication (17), configuré pour effectuer des secondes opérations de produit scalaire par élément en fonction des premières données de valeur, du score d'attention et des secondes données de valeur pour générer une sortie d'attention ; et
un première additionneur (18), configuré pour additionner la sortie d'attention et l'état caché pour générer un état caché mis à jour ;
dans lequel les secondes données de clé codées en position sont obtenues et mises en cache avant que les premières données de clé codées en position ne soient générées, et les secondes données de valeur sont obtenues et mises en cache avant que les premières données de valeur ne soient générées,
dans lequel le système comprend en outre :
une mémoire tampon en anneau (RC), configurée pour sauvegarder les premières données de valeur, les secondes données de valeur, les premières données de clé codées en position et les secondes données de clé codées en position, et
dans lequel une partie de segments de mémoire de la mémoire tampon en anneau (RC) sont découpés pour générer une première mémoire cache de valeur (12) et/ou une première mémoire cache de clé (14), une autre partie de segments de mémoire de la mémoire tampon en anneau (RC) sont découpés pour générer une seconde mémoire cache de valeur (12') et/ou une seconde mémoire cache de clé (14'), la première mémoire cache de valeur (12) est configurée pour sauvegarder les premières données de valeur, la seconde mémoire cache de valeur (12') est configurée pour sauvegarder les secondes données de valeur, la première mémoire cache de clé (14) est configurée pour sauvegarder les premières données de clé codées en position, et la seconde mémoire cache de clé (14') est configurée pour sauvegarder les secondes données de clé codées en position.

10. Système selon la revendication 9, dans lequel le premier module de multiplication (16) comprend :
un première module de multiplication matricielle par lots (BMM1), configuré pour effectuer un première produit scalaire matriciel sur les premières données de clé codées en position et les données d'interrogation codées en position pour générer une sortie de première produit ;
un second module de multiplication matricielle par lots (BMM2), configuré pour effectuer un second produit scalaire matriciel sur les secondes données de clé codées en position et les données d'interrogation codées en position pour générer une sortie de seconde produit ; et
un module de concaténation (16b), configuré pour concaténer la sortie de première produit et la sortie de seconde produit pour générer le score d'attention.

11. Système selon la revendication 9 ou 10,
dans lequel le second module de multiplication (17) comprend :
un troisième module de multiplication matricielle par lots (BMM3), configuré pour effectuer un troisième produit scalaire matriciel en fonction du score d'attention et des secondes données de valeur pour générer une sortie de troisième produit,
un quatrième module de multiplication matricielle par lots (BMM4), configuré pour effectuer un quatrième produit scalaire matriciel en fonction du score d'attention et des premières données de valeur pour générer une sortie de quatrième produit, et
un second additionneur (17c), configuré pour additionner la sortie de troisième produit et la sortie de quatrième produit pour générer la sortie d'attention ; et/ou
dans lequel le système comprend en outre :
un module softmax (171), configuré pour effectuer une fonction softmax sur le score d'attention pour générer un poids d'attention pour le second module de multiplication, dans lequel les secondes opérations de produit scalaire par élément sont exécutées en fonction des premières données de valeur, du poids d'attention et des secondes données de valeur pour générer la sortie d'attention, et/ou
un générateur de valeur de masque (20) et un troisième additionneur (21), configurés pour remplacer des valeurs nulles du score d'attention par des valeurs de masque générées par le générateur de valeur de masque pour générer un score d'attention mis à jour.

12. Système selon l'une quelconque des revendications 9 à 11, comprenant en outre :
un module de normalisation de couche d'entrée (11), configuré pour normaliser l'état caché en tant qu'état caché normalisé en ajustant une somme des carrés d'éléments de l'état caché égale à un nombre fixe ; et
un module de normalisation de couche de sortie (19), configuré pour normaliser l'état caché mis à jour en tant qu'état caché mis à jour normalisé en ajustant une somme des carrés d'éléments de l'état caché mis à jour égale au nombre fixe.

13. Système selon l'une quelconque des revendications 9 à 12,
dans lequel une autre partie de segments de mémoire à partir de la mémoire tampon en anneau (RC) sont décalés en incrémentant une valeur de décalage d'adresses de mémoire après que les premières données de valeur et/ou les premières données de clé ont été sauvegardées, après qu'une autre partie de segments de mémoire à partir de la mémoire tampon en anneau (RC) ont été décalées, les secondes données de valeur et/ou les secondes données de clé codées en position sont mises à jour, dans lequel les secondes données de valeur mises à jour comprennent les premières données de valeur et une partie des secondes données de valeur, et/ou, les secondes données de clé codées en position mises à jour comprennent les premières données de clé codées en position et une partie des secondes données de clé codées en position ;
dans lequel de préférence une autre partie de segments de mémoire de la mémoire tampon en anneau (RC) sont copiés selon leurs adresses de mémoire initialisées après qu'une autre partie de segments de mémoire ont été décalés pour atteindre un segment de mémoire de fin de la mémoire tampon en anneau (RC).

14. Procédé selon l'une quelconque des revendications 1 à 8, ou système selon l'une quelconque des revendications 9 à 13, dans lequel un format de forme de signal des premières données de valeur et des premières données de clé codées en position est représenté par (B, N, T, D), un format de forme de signal des secondes données de valeur et des secondes données de clé codées en position est représenté par (B, N, C, D), B est une taille de lot, T est une quantité de jeton, N est une quantité de tête d'attention, D est une dimension de tête pour chaque tête d'attention, et C est un nombre défini par l'utilisateur précédemment déterminé.
